# EUROPÄISCHE PATENTSCHRIFT

(11) **EP 3 933 539 B1**
(45) Veröffentlichungstag und Bekanntmachung des Hinweises auf die Patenterteilung: **06.03.2024**
(21) Anmeldenummer: 21176995.5
(22) Anmeldetag: 31.05.2021
(51) Int. Cl.: G05D 1/02

(54) **AUTONOM FÜHRBARER FAHRZEUGZUG**
AUTONOMOUSLY GUIDED VEHICLE TRAIN
TRAIN DE VÉHICULES POUVANT ÊTRE CONDUIT DE MANIÈRE AUTONOME

(30) Priorität: 26.06.2020 DE 102020207960
(43) Veröffentlichungstag der Anmeldung: 05.01.2022
(73) Patentinhaber: Volkswagen Aktiengesellschaft, 38440 Wolfsburg (DE)
(72) Erfinder: Levko, Peter, 38108 Braunschweig (DE); Ricci, Roberta, 38100 Braunschweig (DE)

(56) Entgegenhaltungen:
- EP-A1- 3 459 859
- DE-A1-102018 118 744
- US-A1- 2018 022 405

## Beschreibung

Die vorliegende Erfindung betrifft einen autonom führbaren Fahrzeugzug sowie ein Verfahren zum autonomen Führen eines Fahrzeugzugs.

Aus dem Stand der Technik sind vollautonom betreibbare, also selbstfahrende, Kraftfahrzeuge bekannt. Damit diese vollständig ohne menschliche Steuerung beziehungsweise ohne Unterstützung durch ein weiteres Fahrzeug betrieben werden können, ist eine umfangreiche Ausstattung des selbstfahrenden Kraftfahrzeugs mit Sensorsystemen aller Art, leistungsfähigen Recheneinheiten sowie Softwaresystemen erforderlich. Vor allem wenn mehrere Kraftfahrzeuge autonom betrieben werden sollen, stellt dies einen enormen Entwicklungs- und Kostenaufwand dar. Außerdem wird ein signifikanter Teil des Bauraums durch die Ausstattung belegt.

Dokument US 2018/0022405 A1 beschreibt eine starr gekoppelte Fahrzeugbaugruppe ("RCVA"), die durch mehrere unabhängige Fahrzeuge ("IVs"), die miteinander gekoppelt sind, gebildet wird. Jedes der IVs kann ein selbstfahrendes autonomes Fahrzeug sein. Die IVs umfassen beispielsweise ein Antriebssystem und ein Lenksystem.

Vor diesem Hintergrund ist es eine Aufgabe der vorliegenden Erfindung, ein verbessertes Konzept zum autonomen Führen eines Fahrzeugzuges anzugeben, durch das insgesamt die Anforderungen an die Ausstattung der Fahrzeuge des Fahrzeugzuges reduziert werden können.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept basiert auf dem Gedanken, bei einem Fahrzeugzug ein selbstfahrendes Leitfahrzeug vorzusehen und wenigstens zwei Folgefahrzeuge, die aneinander koppelbar sind und von denen eines an das Leitfahrzeug koppelbar ist. Die Folgefahrzeuge folgen dann dem selbstfahrenden Leitfahrzeug.

Gemäß dem verbesserten Konzept wird ein autonom führbarer Fahrzeugzug angegeben. Der Fahrzeugzug enthält ein selbstfahrendes erstes Leitfahrzeug, ein erstes Folgefahrzeug und ein zweites Folgefahrzeug. Der Fahrzeugzug enthält eine erste Koppeleinheit, die dazu eingerichtet ist, das erste Folgefahrzeug und das erste Leitfahrzeug aneinander zu koppeln. Der Fahrzeugzug enthält eine zweite Kopplungseinheit, die dazu eingerichtet ist, das zweite Folgefahrzeug und das erste Folgefahrzeug aneinander zu koppeln. Das erste Folgefahrzeug weist ein erstes Antriebssystem auf sowie eine erste Steuereinheit, wobei die erste Steuereinheit dazu eingerichtet ist, das erste Antriebssystem automatisch so anzusteuern, dass das erste Folgefahrzeug dem ersten Leitfahrzeug folgt, wenn das erste Folgefahrzeug und das erste Leitfahrzeug aneinander gekoppelt sind. Das zweite Folgefahrzeug weist ein zweites Antriebssystem und eine zweite Steuereinheit auf, wobei die zweite Steuereinheit dazu eingerichtet ist, das zweite Antriebssystem automatisch so zu steuern, dass das zweite Folgefahrzeug dem ersten Folgefahrzeug folgt, und damit indirekt dem ersten Leitfahrzeug, wenn das zweite Folgefahrzeug und das erste Folgefahrzeug aneinander gekoppelt sind.

Unter einem Fahrzeugzug kann hier und im Folgenden ein Verbund aus wenigstens drei Fahrzeugen verstanden werden, die entlang einer gemeinsamen Strecke oder Trajektorie geführt werden. Gemäß dem verbesserten Konzept enthalten die wenigstens drei Fahrzeuge das erste Leitfahrzeug sowie das erste und das zweite Folgefahrzeug.

Unter einem selbstfahrenden Fahrzeug, insbesondere unter dem selbstfahrenden ersten Leitfahrzeug, kann hier und im Folgenden ein Kraftfahrzeug verstanden werden, das dazu eingerichtet ist, vollautonom oder vollautomatisch, und insbesondere unbemannt sowie ohne Fernsteuerung durch eine menschliche Person und ohne einem Referenzfahrzeug zu folgen, geführt werden kann. Ein selbstfahrendes Fahrzeug kann dementsprechend auch als Roboterfahrzeug bezeichnet werden. Das selbstfahrende Fahrzeug führt alle erforderlichen Funktionen, wie gegebenenfalls erforderliche Lenk-, Brems- und/oder Beschleunigungsmanöver, die Beobachtung und Erfassung des Verkehrs sowie die damit verbundenen erforderlichen Reaktionen selbsttätig und vollautomatisch durch. Insbesondere kann das selbstfahrende Fahrzeug als Fahrzeug gemäß Stufe 5 der Klassifizierung gemäß SAE J3016 ausgestaltet sein. Hier und im Folgenden bezieht sich "SAE J3016" auf die entsprechende Norm in der Version vom Juni 2018.

Die Folgefahrzeuge sind insbesondere dazu eingerichtet, ebenfalls ohne direkte Steuerung oder Fernsteuerung eines Menschen geführt zu werden. Die Folgefahrzeuge können dadurch als wenigstens teilweise automatisierte oder teilautonome Kraftfahrzeuge angesehen werden. Die Folgefahrzeuge sind dabei jedoch nicht als selbstfahrende Fahrzeuge ausgestaltet. Mit anderen Worten sind die Folgefahrzeuge auf die Führung durch ein weiteres Fahrzeug angewiesen. Dies kann beispielsweise durch ein selbstfahrendes Fahrzeug erfolgen oder durch ein weiteres Folgefahrzeug.

Unter der Kopplung zweier Fahrzeuge aneinander durch die jeweilige Kopplungseinheit kann hier und im Folgenden verstanden werden, dass durch die jeweilige Kopplungseinheit ein Austausch einer Kraft und/oder von Informationen zwischen den jeweiligen aneinander gekoppelten Fahrzeugen möglich ist, sodass basierend auf der ausgetauschten Kraft und/oder den ausgetauschten Informationen eines der Fahrzeuge dem jeweils anderen Fahrzeug folgen kann. Dabei ist es unerheblich, ob das Fahrzeug, dem gefolgt wird, wiederum einem anderen Fahrzeug folgt oder ob das Fahrzeug, dem gefolgt wird, ein selbstfahrendes Fahrzeug ist.

Unter einem Antriebssystem kann insbesondere ein System mit einem Antriebsmotor für das jeweilige Fahrzeug verstanden werden. Das Antriebssystem kann zusätzlich auch ein Bremssystem des jeweiligen Fahrzeugs und/oder ein Lenksystem des jeweiligen Fahrzeugs beinhalten. Lenksystem und/oder Bremssystem des jeweiligen Fahrzeugs können aber auch separat zu dem Antriebssystem ausgestaltet sein.

Es wird darauf hingewiesen, dass ein Folgefahrzeug nach dem verbesserten Konzept nicht notwendigerweise ein Lenksystem aufweist, dies aber in verschiedene Ausgestaltungsformen des Fahrzeugzugs der Fall sein kann
Um das erste Folgefahrzeug beziehungsweise das zweite Folgefahrzeug derart zu steuern, dass es dem ersten Leitfahrzeug beziehungsweise dem ersten Folgefahrzeug folgt, kann die jeweilige Steuereinheit also das entsprechende Antriebssystem und optional das entsprechende Brems- und/oder Lenksystem des jeweiligen Folgefahrzeugs derart ansteuern, dass eine Längsgeschwindigkeit und optional ein Lenkwinkel des jeweiligen Folgefahrzeugs an das aktuelle Verhalten des vorausfahrenden ersten Leitfahrzeugs beziehungsweise ersten Folgefahrzeugs angepasst wird, oder dass, mit anderen Worten, das Verhalten des vorausfahrenden ersten Leitfahrzeugs oder ersten Folgefahrzeugs nachgestellt oder imitiert wird.

Mit anderen Worten führt das erste Folgefahrzeug Manöver zur Fahrzeugführung, welche das erste Leitfahrzeug durchführt, ebenfalls aus oder näherungsweise aus, gegebenenfalls zeitversetzt. Analog gilt dies für das zweite Folgefahrzeug, um dem ersten Folgefahrzeug zu folgen.

Gemäß dem verbesserten Konzept muss also zur Realisierung eines autonom fahrbaren Fahrzeugzugs lediglich das erste Leitfahrzeug als selbstfahrendes Fahrzeug ausgestaltet sein, wohingegen die Folgefahrzeuge lediglich dazu ausgelegt sein müssen, dass sie einem anderen Fahrzeug folgen können. Dadurch ist für die Folgefahrzeuge ein signifikant reduzierter Aufwand hinsichtlich der vorzusehenden Sensorsysteme, sonstiger Hard- und Softwaresysteme und/oder Sicherheitssysteme erforderlich. Damit können für den gesamten Fahrzeugzug Kosten eingespart werden. Ein weiterer Vorteil des verbesserten Konzepts ist, dass die konkrete Ausgestaltung der Folgefahrzeuge flexibel sein kann und insbesondere je nach Anwendungsfall des Folgefahrzeugs unterschiedlich sein kann. So können beispielsweise Folgefahrzeuge zum Personentransport, Folgefahrzeuge zum Bereitstellen von Dienstleistungen und so weiter, gleichermaßen eingesetzt werden. Auch ist es zwar möglich, jedoch nicht erforderlich, dass alle Folgefahrzeuge des Fahrzeugzugs gleich ausgestaltet sind.

Ein weiterer Vorteil des verbesserten Konzepts ist, dass durch den oben genannten reduzierten Aufwand für Sensorsysteme und Hardware der Folgefahrzeuge ein Bauraum der Folgefahrzeuge reduziert werden kann beziehungsweise der Bauraum für sonstige Komponenten oder Zwecke zur Verfügung steht.

Gemäß zumindest einer Ausführungsform des autonom führbaren Fahrzeugzugs enthält der Fahrzeugzug ein selbstfahrendes zweites Leitfahrzeug.

Die bezüglich des ersten Leitfahrzeugs gemachten Ausführungen lassen sich analog auf das zweite Leitfahrzeug übertragen.

Insbesondere kann der Fahrzeugzug eine Vielzahl von Fahrzeugen beinhalten, die beim autonomen Führen des Fahrzeugzuges hintereinander angeordnet sind. Die Vielzahl von Fahrzeugen beinhaltet dabei das erste und das zweite Leitfahrzeug sowie das erste und das zweite Folgefahrzeug und kann optional eines oder mehrere weitere Folgefahrzeuge beinhalten. Beim autonomen Führen des Fahrzeugzuges sind die Leitfahrzeuge und die Folgefahrzeuge dabei derart angeordnet, dass sich das erste und das zweite Folgefahrzeug sowie die weiteren Folgefahrzeuge zwischen dem ersten und dem zweiten Leitfahrzeug befinden.

Mit anderen Worten stellt das erste Leitfahrzeug ein erstes Fahrzeug des Fahrzeugzuges dar und das zweite Leitfahrzeug stellt ein letztes Fahrzeug des Fahrzeugzuges dar oder umgekehrt. Insbesondere können die Leitfahrzeuge und gegebenenfalls die Folgefahrzeuge derart eingerichtet sein, dass auch eine Richtungsumkehr möglich ist, sodass das erste und das zweite Leitfahrzeug, je nach Bewegungsrichtung des Fahrzeugzuges, ohne Veränderung der Anordnung der Folgefahrzeuge und der Leitfahrzeuge innerhalb des Fahrzeugzuges jeweils sowohl als erstes Fahrzeug des Fahrzeugzuges als auch als letztes Fahrzeug des Fahrzeugzuges dienen können.

Die Ausführungen hinsichtlich des ersten und des zweiten Folgefahrzeugs lassen sich analog auf das wenigstens eine weitere Folgefahrzeug übertragen. Insbesondere weist jedes weitere Folgefahrzeug es wenigstens einen weiteren Folgefahrzeugs ein entsprechendes Antriebssystem sowie eine entsprechende Steuereinheit auf, die das jeweilige Antriebssystem derart steuern kann, dass es dem jeweils vorausfahrenden Folgefahrzeug beziehungsweise Leitfahrzeug folgen kann.

Gemäß zumindest einer Ausführungsform enthält der Fahrzeugzug eine dritte Kopplungseinheit, die dazu eingerichtet ist, das zweite Folgefahrzeug und das zweite Leitfahrzeug aneinander zu koppeln.

Gemäß zumindest einer Ausführungsform enthält der Fahrzeugzug eine weitere Kopplungseinheit, die dazu eingerichtet ist, das wenigstens eine weitere Folgefahrzeug, insbesondere ein auf das zweite Folgefahrzeug folgendes weiteres Folgefahrzeug, aneinander zu koppeln.

Weist der Fahrzeugzug das wenigstens eine weitere Folgefahrzeug auf, so ist die oben ausgeführte Einsparung hinsichtlich der Anforderungen an Sensorik, Hard- und Software und damit die entsprechende Kosteneinsparung noch größer. Insbesondere ist die jeweilige Einsparung umso größer, je mehr Folgefahrzeuge der Fahrzeugzug enthält.

Gemäß zumindest einer Ausführungsform enthält der Fahrzeugzug das zweite selbstfahrende Leitfahrzeug sowie das wenigstens eine Folgefahrzeug und eine weitere dritte Kopplungseinheit. Die weitere dritte Kopplungseinheit ist dazu eingerichtet, ein finales Folgefahrzeug des wenigstens einen weiteren Folgefahrzeugs und das zweite Leitfahrzeug aneinander zu koppeln.

Gemäß zumindest einer Ausführungsform weist das erste Leitfahrzeug, insbesondere das Bremssystem des ersten Leitfahrzeugs, einen Bremsaktuator und eine Bremssteuereinheit auf, wobei die Bremssteuereinheit dazu eingerichtet ist, den Bremsaktuator, insbesondere automatisch, zu betätigen. Das erste Leitfahrzeug weist eine Kommunikationsschnittstelle auf, die dazu eingerichtet ist, abhängig von der Betätigung des Bremsaktuators durch die Bremssteuereinheit ein Informationssignal drahtlos an das zweite Leitfahrzeug, insbesondere eine Kommunikationsschnittstelle des zweiten Leitfahrzeugs, zu übermitteln.

In solchen Ausführungsformen kann das zweite Leitfahrzeug schneller auf ein Bremsmanöver des ersten Leitfahrzeugs reagieren und so beispielsweise einen Sicherheitsabstand zwischen dem zweiten Leitfahrzeug und dem finalen Folgefahrzeug, beziehungsweise, falls der Fahrzeugzug das wenigstens eine weitere Folgefahrzeug nicht aufweist, dem zweiten Folgefahrzeug, zuverlässiger einhalten.

Das zweite Leitfahrzeug kann hinsichtlich des Bremssystems entsprechend dem ersten Leitfahrzeug ausgestaltet sein.

Gemäß zumindest einer Ausführungsform enthält das erste Leitfahrzeug ein Sicherheitssystem, das dazu eingerichtet ist, das Vorliegen einer Unfallsituation zu detektieren. Das Sicherheitssystem enthält ein Aufprallschutzelement sowie eine Auslöseeinheit, wobei die Auslöseeinheit dazu eingerichtet ist, das Aufprallschutzelement zu aktivieren, wenn das Vorliegen der Unfallsituation detektiert wurde.

Das aktivierte Aufprallschutzelement ist insbesondere dazu eingerichtet beziehungsweise im aktivierten Zustand derart angeordnet, dass ein Auffahren des ersten Folgefahrzeugs auf das erste Leitfahrzeug verhindert beziehungsweise gedämpft werden kann. Dadurch können die Unfallfolgen bei einem Unfall des ersten Leitfahrzeugs beziehungsweise bei einer Notbremsung des ersten Leitfahrzeugs reduziert werden, indem eine Beschädigung des ersten Folgefahrzeugs und gegebenenfalls des zweiten und/oder der weiteren Folgefahrzeuge verhindert oder begrenzt werden kann.

In solchen Ausführungsformen übernimmt also das erste Leitfahrzeug Sicherheitsfunktionen des Fahrzeugzugs. Dadurch können die erforderlichen Anforderungen an Sicherheitssysteme der Folgefahrzeuge und dementsprechend Kosten des gesamten Fahrzeugzugs reduziert werden. Außerdem kann auch dadurch der Bauraum der Folgefahrzeuge reduziert beziehungsweise für sonstige Zwecke bereitgestellt werden.

Das zweite Leitfahrzeug kann beispielsweise hinsichtlich des Sicherheitssystems entsprechend dem ersten Leitfahrzeug ausgestaltet sein.

Gemäß zumindest einer Ausführungsform ist das Aufprallschutzelement zumindest zum Teil zwischen dem ersten Leitfahrzeug und dem ersten Folgefahrzeug angeordnet, wenn das Aufprallschutzelement aktiviert wurde.

Analoges gilt für das entsprechend ausgestaltete zweite Leitfahrzeug in entsprechenden Ausführungsformen, dessen Aufprallschutzelement sich dann bei Aktivierung wenigstens zum Teil zwischen dem zweiten Leitelement und dem finalen Folgefahrzeug beziehungsweise dem zweiten Folgefahrzeug befindet.

Gemäß zumindest einer Ausführungsform enthält das Sicherheitssystem ein Airbagsystem.

Gemäß zumindest einer Ausführungsform enthält das Aufprallschutzelement ein Aufprallkissen. Die Auslöseeinheit ist dazu eingerichtet, ein Gas in das Aufprallkissen einzuleiten, um das Aufprallschutzelement zu aktivieren.

Dadurch kann eine besonders platzsparende Ausgestaltung des Sicherheitssystems im Normalbetrieb des Fahrzeugzuges erzielt werden und eine hohe Schutzwirkung im Falle eines Unfalls erreicht werden.

Gemäß zumindest einer Ausführungsform enthält die erste Kopplungseinheit ein Umfeldsensorsystem, das dazu eingerichtet ist, wenigstens ein Sensorsignal zu erzeugen, das einen Bereich zwischen dem ersten Leitfahrzeug und dem ersten Folgefahrzeug darstellt. Die erste Steuereinheit ist dazu eingerichtet, das erste Antriebssystem abhängig von dem wenigstens einen Sensorsignal zu steuern, sodass das erste Folgefahrzeug dem ersten Leitfahrzeug folgt.

Insbesondere ist das Umfeldsensorsystem mit der ersten Steuereinheit drahtgebunden oder drahtlos gekoppelt, um das wenigstens eine Sensorsignal an die erste Steuereinheit zu übertragen, das Umfeldsensorsystem kann dabei an dem ersten Leitfahrzeug, insbesondere an einer dem ersten Folgefahrzeug zugewandten Seite des ersten Leitfahrzeugs, oder an dem ersten Folgefahrzeug, insbesondere einer dem ersten Leitfahrzeug zugewandten Seite des ersten Folgefahrzeugs, angeordnet sein. In verschiedenen Ausführungsformen können eine oder mehrere Komponenten des Umfeldsensorsystems an dem ersten Leitfahrzeug angeordnet sein und eine oder mehrere weitere Komponenten des Umfeldsensorsystems können an dem ersten Folgefahrzeug angeordnet sein.

Das Umfeldsensorsystem kann dabei insbesondere eine oder mehrere Kameras, eines oder mehrere Radarsysteme, eines oder mehrere Lidarsysteme, eines oder mehrere sonstige aktive optische Sensorsysteme, eines oder mehrere Ultraschallsensorsysteme und/oder eines oder mehrere sonstige Abstandssensorsysteme aufweisen.

Die erste Steuereinheit kann insbesondere abhängig von dem wenigstens einen Sensorsignal das erste Antriebssystem, und optional das Bremssystem und/oder Lenksystem des ersten Folgefahrzeugs, derart ansteuern, dass der Abstand zwischen dem ersten Leitfahrzeug und dem ersten Folgefahrzeug in einem vorgegebenen Bereich liegt, sodass das erste Folgefahrzeug also dem ersten Leitfahrzeug folgt.

Durch die Verwendung des Umfeldsensorsystems der ersten Kopplungseinheit ist es insbesondere möglich, auf mechanische oder physische Verbindungen zwischen dem ersten Folgefahrzeug und dem ersten Leitfahrzeug zu verzichten beziehungsweise diese einfacher auszuführen. Außerdem ist es ohne ein mechanisches oder physisches Verbindungselement nicht erforderlich, dass manuelle Schritte zur Kopplung zwischen dem ersten Leitfahrzeug und dem ersten Folgefahrzeug vorgenommen werden, beispielsweise durch einen menschlichen Benutzer.

Die obigen und folgenden Ausführungen bezüglich der ersten Kopplungseinheit lassen sich analog auf sämtliche weitere Kopplungseinheiten des Fahrzeugzugs übertragen, insbesondere auf die zweite und die dritte Kopplungseinheit sowie die weitere Kopplungseinheit. Das erste Leitfahrzeug und das erste Folgefahrzeug sind dann durch die entsprechend benachbarten beziehungsweise aneinander gekoppelten Fahrzeuge zu ersetzen. Es wird darauf hingewiesen, dass verschiedene Kopplungseinheiten des Fahrzeugzugs gleich oder unterschiedlich zueinander ausgestaltet sein können.

Gemäß zumindest einer Ausführungsform ist die erste Steuereinheit dazu eingerichtet, einen Abstand zwischen dem ersten Leitfahrzeug und dem ersten Folgefahrzeug zu regeln, sodass der Abstand innerhalb eines vorgegebenen Abstandsbereichs liegt und/oder sodass der Abstand größer oder gleich einem vorgegebenen Mindestabstand ist.

Die Regelung des Abstands kann insbesondere durch Steuern oder Regeln des ersten Antriebssystems und optional des Bremssystems und/oder des Lenksystems des ersten Folgefahrzeugs erfolgen. Dadurch kann die Sicherheit weiter erhöht werden.

Gemäß zumindest einer Ausführungsform enthält die erste Kopplungseinheit ein mechanisches Verbindungselement, das dazu eingerichtet ist, das erste Leitfahrzeug mit dem ersten Folgefahrzeug zu verbinden, um das erste Leitfahrzeug und das erste Folgefahrzeug aneinander zu koppeln.

Das mechanische Verbindungselement kann zusätzlich oder alternativ zu dem Umfeldsensorsystem der ersten Kopplungseinheit vorgesehen sein.

Durch das mechanische Verbindungselement können die Anforderungen an das Umfeldsensorsystem und die Auswertung des wenigstens einen Sensorsignals des Umfeldsensorsystems reduziert werden oder gegebenenfalls vollständig auf das Umfeldsensorsystem verzichtet werden, was wiederum zu Einsparungen bei Bauraum und Kosten für den Fahrzeugzug führt.

Gemäß zumindest einer Ausführungsform enthält die erste Kopplungseinheit einen Kraftsensor, der dazu eingerichtet und angeordnet ist, abhängig von einer durch das mechanische Verbindungselement zwischen dem ersten Leitfahrzeug und dem ersten Folgefahrzeug übertragenen Kraft ein Kraftsensorsignal zu erzeugen. Die erste Steuereinheit ist dazu eingerichtet, das erste Antriebssystem abhängig von dem Kraftsensorsignal zu steuern, insbesondere sodass das erste Folgefahrzeug dem ersten Leitfahrzeug folgt.

Dadurch kann eine zu starke mechanische Beanspruchung oder eine mechanische Beschädigung des Verbindungselements vermieden werden. Außerdem kann das Folgefahrzeug so schneller auf Verzögerungen oder Bremsmanöver des ersten Leitfahrzeugs reagieren.

Gemäß zumindest einer Ausführungsform sind das erste Leitfahrzeug und/oder das zweite Leitfahrzeug als einachsiges, selbstbalancierendes Fahrzeug ausgestaltet.

Dadurch werden Bauraum und/oder Gewicht des ersten und/oder zweiten Leitfahrzeugs reduziert.

Gemäß zumindest einer Ausführungsform wird auch ein Verfahren zum autonomen Führen eines Fahrzeugzugs angegeben. Der Fahrzeugzug enthält dabei ein erstes selbstfahrendes Leitfahrzeug, ein erstes Folgefahrzeug und ein zweites Folgefahrzeug. Gemäß dem Verfahren werden das erste Folgefahrzeug und das erste Leitfahrzeug, insbesondere mittels einer ersten Kopplungseinheit, aneinander gekoppelt. Das zweite Folgefahrzeug und das erste Folgefahrzeug werden, insbesondere mittels einer zweiten Kopplungseinheit, aneinander gekoppelt. Das erste Folgefahrzeug wird automatisch so gesteuert, dass das erste Folgefahrzeug dem ersten Leitfahrzeug folgt, wenn das erste Folgefahrzeug und das erste Leitfahrzeug aneinander gekoppelt sind. Das zweite Folgefahrzeug wird automatisch so gesteuert, dass das zweite Folgefahrzeug dem ersten Folgefahrzeug folgt, wenn das zweite Folgefahrzeug und das erste Folgefahrzeug aneinander gekoppelt sind. Gemäß zumindest einer Ausführungsform des Verfahrens wird das erste Leitfahrzeug autonom, also insbesondere vollautomatisch, von einer Ausgangsposition zu einer vorgegebenen Zielposition geführt.

Das erste Folgefahrzeug und das zweite Folgefahrzeug folgen dann dem ersten Leitfahrzeug entsprechend von jeweiligen Positionen entsprechend der Ausgangsposition zur jeweiligen Position entsprechend der Zielposition.

Im Folgenden werden Ausführungsbeispiele der Erfindung beschrieben. Hierzu zeigen:
- Fig. 1: eine schematische Darstellung einer beispielhaften Ausführungsform eines autonom führbaren Fahrzeugzugs nach dem verbesserten Konzept;
- Fig. 2: eine schematische Darstellung einer weiteren beispielhaften Ausführungsform eines autonom führbaren Fahrzeugzugs nach dem verbesserten Konzept;
- Fig. 3: eine schematische Darstellung einer weiteren beispielhaften Ausführungsform eines autonom führbaren Fahrzeugzugs nach dem verbesserten Konzept;
- Fig. 4A: eine schematische Darstellung einer beispielhaften Ausführungsform eines autonom führbaren Fahrzeugzugs nach dem verbesserten Konzept; und

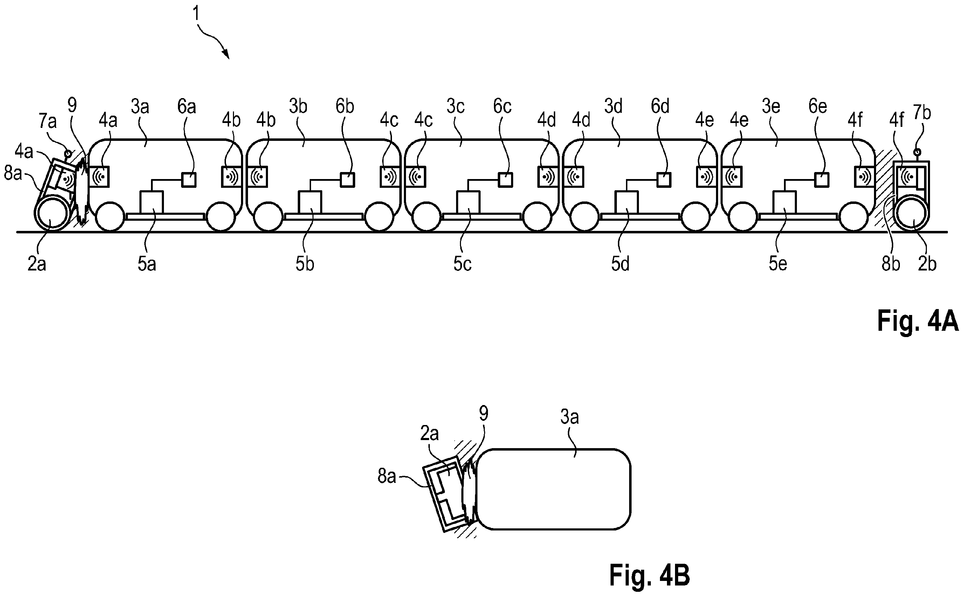

- Fig. 4A: eine Draufsicht eines Teils des Fahrzeugzugs aus Fig. 4a.

In den Figuren sind funktionsgleiche Elemente jeweils mit denselben Bezugszeichen versehen.

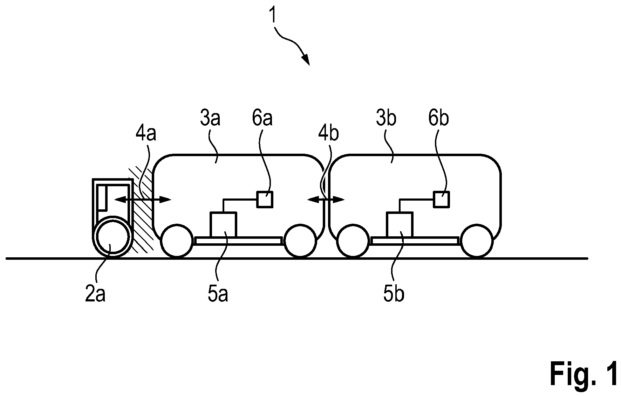

In Fig. 1 ist schematisch eine beispielhafte Ausführungsform eines autonom führbaren Fahrzeugzugs 1 nach dem verbesserten Konzept gezeigt. Der Fahrzeugzug 1 weist ein selbstfahrendes erstes Leitfahrzeug 2a auf, ein damit gekoppeltes erstes Folgefahrzeug 3a sowie ein mit dem ersten Folgefahrzeug 3a gekoppeltes zweites Folgefahrzeug 3b. Dabei enthält der Fahrzeugzug 1 eine erste Kopplungseinheit 4a zur Kopplung des ersten Leitfahrzeugs 2a mit dem ersten Folgefahrzeug 3b und eine zweite Kopplungseinheit 4b zur Kopplung des ersten Folgefahrzeugs 3a mit dem zweiten Folgefahrzeug 3b. Das erste und das zweite Folgefahrzeug 3a, 3b enthalten ein erstes Antriebssystem 5a beziehungsweise ein zweites Antriebssystem 5b sowie eine erste Steuereinheit 6a und eine zweite Steuereinheit 6b.

Die Kopplungseinheiten 4a, 4b können dabei als virtuelle Kopplungseinheiten oder als physische Kopplungseinheiten oder als Kombination der beiden Möglichkeiten ausgestaltet sein. Eine virtuelle Kopplungseinheit enthält dabei ein Umfeldsensorsystem, wie beispielsweise eine oder mehrere Kameras, Ultraschallsensoren, Radarsysteme oder Laserabstandssensoren. Eine physische Kopplungseinheit enthält eines oder mehrere mechanische Verbindungselemente zum mechanischen Verbinden des Leitfahrzeugs 2a mit dem ersten Folgefahrzeug 3a. Analoges gilt hinsichtlich der zweiten Kopplungseinheit 4b.

Im Betrieb des autonom führbaren Fahrzeugzugs 1 wird das erste Leitfahrzeug 2a beispielsweise durch ein elektronisches Fahrzeugführungssystem (nicht dargestellt) des ersten Leitfahrzeugs 2a vollautonom von einer Ausgangsposition zu einer vorgegebenen Zielposition geführt. Die erste Steuereinheit 6a ist dazu eingerichtet, das erste Antriebssystem 5a derart zu steuern, dass das erste Folgefahrzeug 3a dem ersten Leitfahrzeug 2a bei dessen autonomer Fahrt folgt. Entsprechend ist die zweite Steuereinheit 6b dazu eingerichtet, das zweite Antriebssystem 5b zu steuern, sodass das zweite Folgefahrzeug 3b dem ersten Folgefahrzeug 3a und damit indirekt auch dem ersten Leitfahrzeug 2a folgt.

Das erste Leitfahrzeug 2a kann dabei in verschiedenen Ausführungsformen als einachsiges, selbstbalancierendes Fahrzeug ausgestaltet sein.

Beispielsweise kann das erste Leitfahrzeug 2a und/oder das erste Folgefahrzeug 3a, insbesondere über die erste Kopplungseinheit 4a, sicherstellen, dass ein vorgegebener Sicherheitsabstand zwischen dem ersten Leitfahrzeug 2a und dem ersten Folgefahrzeug 3a eingehalten wird.

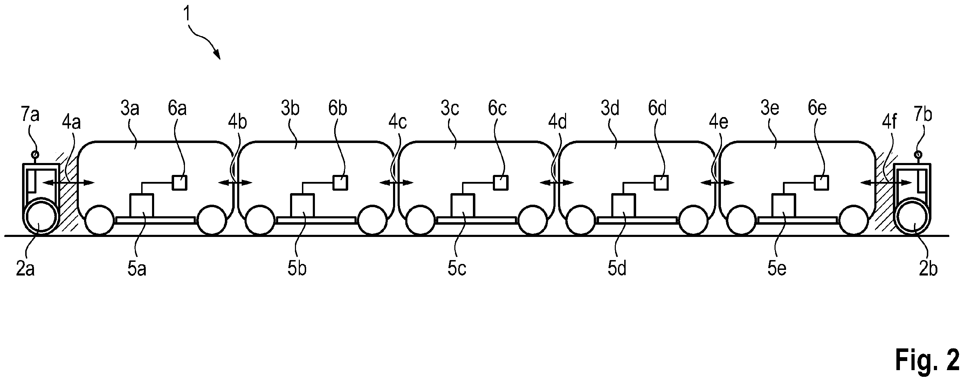

In Fig. 2 ist eine weitere beispielhafte Ausführungsform eines Fahrzeugzugs 1 nach dem verbesserten Konzept schematisch dargestellt, wobei der Fahrzeugzug 1 der Fig. 2 auf demjenigen der Fig. 1 basiert.

Der Fahrzeugzug 1 der Fig. 2 weist außerdem drei weitere Folgefahrzeuge 3c, 3d, 3e auf, wobei das weitere Folgefahrzeug 3c mittels einer Kopplungseinheit 4c an das zweite Folgefahrzeug 3b gekoppelt ist, das weitere Folgefahrzeug 3d mittels einer Kopplungseinheit 4d an das Folgefahrzeug 3c gekoppelt ist und das Folgefahrzeug 3e mittels einer Kopplungseinheit 4e an das Folgefahrzeug 3d gekoppelt ist.

Außerdem weist der Fahrzeugzug 1 ein zweites selbstfahrendes Leitfahrzeug 2b auf, das analog zum ersten selbstfahrenden Leitfahrzeug 2a ausgestaltet sein kann. Dabei können die Folgefahrzeuge 3a, 3b, 3c, 3d, 3e im Betrieb des Fahrzeugzugs 1 zwischen dem ersten Leitfahrzeug 2a und dem zweiten Leitfahrzeug 2b angeordnet sein. Das zweite Leitfahrzeug 2b ist mittels einer Kopplungseinheit 4f an das Folgefahrzeug 3e gekoppelt. Die weiteren Folgefahrzeuge 3c, 3d, 3e weisen ebenfalls, wie bezüglich der Folgefahrzeuge 3a, 3b beschrieben, entsprechende Antriebssysteme 5c, 5d, 5e und diese steuerende Steuereinheiten 4c, 4d, 4e auf. Es wird darauf hingewiesen, dass die Anzahl der Folgefahrzeuge in Fig. 2 lediglich beispielhaft gewählt ist und auch abweichende Werte annehmen kann.

Das weitere Leitfahrzeug 2b kann beispielsweise eingerichtet sein, beispielsweise mittels der Kopplungseinheit 4f, einen Sicherheitsabstand zwischen dem Folgefahrzeug 3e und dem zweiten Leitfahrzeug 2b einzuhalten.

Optional können die Leitfahrzeuge 2a, 2b jeweils eine Kommunikationsschnittstelle 7a, 7b aufweisen. Über die Kommunikationsschnittstelle 7a, 7b können die Leitfahrzeuge 2a, 2b miteinander drahtlos kommunizieren. Leitet das erste Leitfahrzeug 2a beispielsweise eine Bremsaktion ein, so kann ein entsprechendes Informationssignal mittels der Kommunikationsschnittstelle 7a des ersten Leitfahrzeugs 2a an die Kommunikationsschnittstelle 7b des zweiten Leitfahrzeugs 2b übermittelt werden. Das zweite Leitfahrzeug 2b kann dann entsprechend auf die Bremsaktion des ersten Leitfahrzeugs 2a reagieren und insbesondere den Sicherheitsabstand einhalten.

Die weiteren Kopplungseinheiten 4c, 4d, 4e, 4f können insbesondere ausgeführt sein, wie dies bezüglich der Kopplungseinheiten 4a, 4b erläutert wurde.

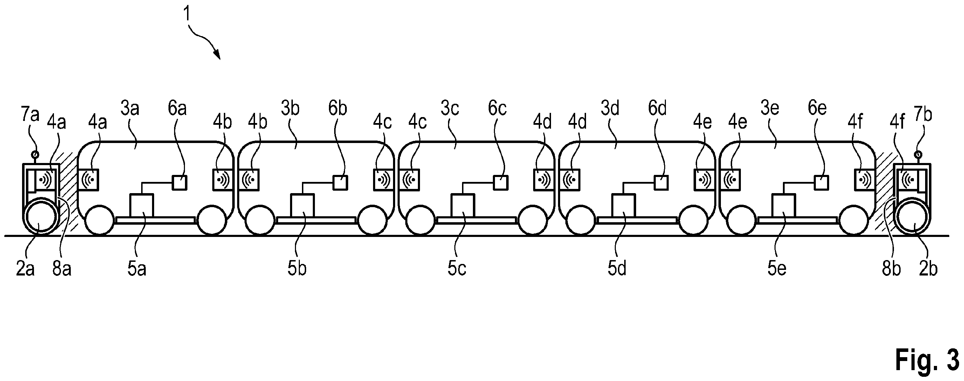

In Fig. 3 ist eine weitere beispielhafte Ausführungsform eines Fahrzeugzugs nach dem verbesserten Konzept dargestellt, wobei der Fahrzeugzug 1 der Fig. 3 auf dem Fahrzeugzug 1 der Fig. 2 basiert.

Die Leitfahrzeuge 2a, 2b des Fahrzeugzugs 1 der Fig. 3 weisen jeweils ein Sicherheitssystem 8a, 8b auf. Die Sicherheitssysteme 8a, 8b können beispielsweise als Airbagsysteme ausgestaltet sein, wobei entsprechende Aufprallkissen mit Gas befüllt werden, wenn ein Beschleunigungssensor oder eine sonstige Auslöseeinheit des entsprechenden Leitfahrzeugs 2a das Vorliegen eines Unfalls oder eine hohe Wahrscheinlichkeit für das Vorliegen eines Unfalls detektiert. Dadurch kann die Sicherheit weiter erhöht werden.

Fig. 4A zeigt den Fahrzeugzug 1 der Fig. 3 schematisch in einer Situation, in der das erste Leitfahrzeug 2a an einem Unfall beteiligt ist oder eine Notbremsung eingeleitet hat. Ferner ist das Aufprallkissen 9 des Sicherheitssystems 8a im aktivierten Zustand, also im mit Gas befüllten Zustand, gezeigt. Das mit Gas gefüllte Aufprallkissen 9 befindet sich dann zwischen dem ersten Leitfahrzeug 2a und dem ersten Folgefahrzeug 3a, um eine Beschädigung des ersten Leitfahrzeugs 2a und/oder des ersten Folgefahrzeugs 3a durch ein Auffahren des ersten Folgefahrzeugs 3a auf das erste Leitfahrzeug 2a zu verhindern.

In der Fig. 4A sind das erste Leitfahrzeug 2a und das erste Folgefahrzeug 3a des Fahrzeugzugs 1 der Fig. 3 beziehungsweise der Fig. 4a in einer Draufsicht dargestellt.

Wie insbesondere hinsichtlich der Figuren ausgeführt, bietet das verbesserte Konzept also eine Möglichkeit, einen autonom führbaren Fahrzeugzug mit geringeren Anforderungen an vorzusehende Sensorsysteme, Hardware- und Softwareeinheiten zu realisieren.

Durch das verbesserte Konzept wird insbesondere für die Folgefahrzeuge eine erhöhte Flexibilität hinsichtlich deren Abmessungen und Funktionen erzielt. Die Anzahl der Folgefahrzeuge kann prinzipiell beliebig erhöht werden, um eine weitere Energieersparnis zu erzielen.

Mit Vorteil ist es nach dem verbesserten Konzept nicht erforderlich, für jedes Folgefahrzeug eine Ausstattung zum autonomen Fahren, insbesondere zum vollautonomen Fahren, vorzusehen beziehungsweise ein eigenes Leitfahrzeug vorzusehen. Durch die Auslagerung der vollautonomen Fahrfunktion in das oder die Leitfahrzeuge steht das gesamte Volumen oder der gesamte Bauraum des beziehungsweise der Folgefahrzeuge für deren Einsatzzweck zur Verfügung.

In den entsprechenden Ausführungsformen übernimmt das Leitfahrzeug beziehungsweise übernehmen die Leitfahrzeuge Sicherheitsfunktionen auch für die Folgefahrzeuge. Deshalb sind gegebenenfalls weniger hohe Anforderungen an Knautschzonen der Folgefahrzeuge einzuhalten, was eine einfachere Konstruktion der Folgefahrzeuge erlaubt.

### Bezugszeichenliste

1 Fahrzeugzug
2a, 2b Leitfahrzeuge
3a, 3b, 3c, 3d, 3e Folgefahrzeuge
4a, 4b, 4c, 4d, 4e, 4f Kopplungseinheiten
5a, 5b, 5c, 5d, 5e Antriebssysteme
6a, 6b, 6c, 6d, 6e Steuereinheiten
7a, 7b Kommunikationsschnittstellen
8a, 8b Sicherheitssysteme
9 Aufprallkissen

## Patentansprüche

1. Autonom führbarer Fahrzeugzug (1), wobei
- der Fahrzeugzug (1) ein selbstfahrendes erstes Leitfahrzeug (2a), ein erstes Folgefahrzeug (3a) und ein zweites Folgefahrzeug (3b) enthält;
- der Fahrzeugzug (1) eine erste Kopplungseinheit (4a) enthält, die dazu eingerichtet ist, das erste Folgefahrzeug (3a) und das erste Leitfahrzeug (2a) aneinander zu koppeln;
- der Fahrzeugzug (1) eine zweite Kopplungseinheit (4b) enthält, die dazu eingerichtet ist, das zweite Folgefahrzeug (3b) und das erste Folgefahrzeug (3a) aneinander zu koppeln;
- das erste Folgefahrzeug (3a) ein erstes Antriebssystem (5a) und erste Steuereinheit (6a) enthält, die dazu eingerichtet ist, das erste Antriebssystem (5a) automatisch so zu steuern, dass das erste Folgefahrzeug (3a) dem ersten Leitfahrzeug (2a) folgt, wenn das erste Folgefahrzeug (3a) und das erste Leitfahrzeug (2a) aneinander gekoppelt sind;
und
- das zweite Folgefahrzeug (3b) ein zweites Antriebssystem (5b) und zweite Steuereinheit (6b) enthält, die dazu eingerichtet ist, das zweite Antriebssystem (5b) automatisch so zu steuern, dass das zweite Folgefahrzeug (3b) dem ersten Folgefahrzeug (3a) folgt, wenn das zweite Folgefahrzeug (3b) und das erste Folgefahrzeug (3a) aneinander gekoppelt sind
- das erste Leitfahrzeug (2a) ein Sicherheitssystem (8a) enthält, das dazu eingerichtet ist, das Vorliegen einer Unfallsituation zu detektieren;
- das Sicherheitssystem (8a) ein Aufprallschutzelement (9) enthält sowie eine Auslöseeinheit, die dazu eingerichtet ist, das Aufprallschutzelement (9) zu aktivieren, wenn das Vorliegen der Unfallsituation detektiert wurde; und
- das Aufprallschutzelement (9) zumindest zum Teil zwischen dem ersten Leitfahrzeug (2a) und dem ersten Folgefahrzeug (3a) angeordnet ist, wenn das Aufprallschutzelement (9) aktiviert wurde.

2. Autonom führbarer Fahrzeugzug (1) nach Anspruch 1,
**dadurch gekennzeichnet, dass**
- der Fahrzeugzug (1) ein selbstfahrendes zweites Leitfahrzeug (2b) enthält; und
- der Fahrzeugzug (1) eine dritte Kopplungseinheit (4f) enthält, die dazu eingerichtet ist, das zweite Folgefahrzeug (3b) und das zweite Leitfahrzeug (2b) aneinander zu koppeln.

3. Autonom führbarer Fahrzeugzug (1) nach Anspruch 1,
**dadurch gekennzeichnet, dass**
- der Fahrzeugzug (1) wenigstens ein weiteres Folgefahrzeug (3c, 3d, 3e) enthält;
- der Fahrzeugzug (1) eine weitere Kopplungseinheit (4c) enthält, die dazu eingerichtet ist, das wenigstens eine weitere Folgefahrzeug (3c, 3d, 3e) und das zweite Folgefahrzeug (3b) aneinander zu koppeln.

4. Autonom führbarer Fahrzeugzug (1) nach Anspruch 3,
**dadurch gekennzeichnet, dass**
- der Fahrzeugzug (1) ein selbstfahrendes zweites Leitfahrzeug (2b) enthält; und
- der Fahrzeugzug (1) eine dritte Kopplungseinheit (4f) enthält, die dazu eingerichtet ist, ein finales Folgefahrzeug (3e) des wenigstens einen weiteren Folgefahrzeugs (3c, 3d, 3e) und das zweite Leitfahrzeug (2b) aneinander zu koppeln.

5. Autonom führbarer Fahrzeugzug (1) nach Anspruch 4,
**dadurch gekennzeichnet, dass**
- das erste Leitfahrzeug (2a) einen Bremsaktuator und eine Bremssteuereinheit aufweist, die dazu eingerichtet ist, den Bremsaktuator zu betätigen; und
- das erste Leitfahrzeug (2a) eine Kommunikationsschnittstelle (7a) aufweist, die dazu eingerichtet ist, abhängig von der Betätigung des Bremsaktuators ein Informationssignal drahtlos an das zweite Leitfahrzeug (2b) zu übermitteln.

6. Autonom führbarer Fahrzeugzug (1) nach einem der vorhergehenden Ansprüche,
**dadurch gekennzeichnet, dass**
das Aufprallschutzelement (9) ein Aufprallkissen (9) enthält und die Auslöseeinheit dazu eingerichtet ist, ein Gas in das Aufprallkissen (9) einzuleiten, um das Aufprallschutzelement (9) zu aktivieren.

7. Autonom führbarer Fahrzeugzug (1) nach einem der vorhergehenden Ansprüche,
**dadurch gekennzeichnet, dass**
- erste Steuereinheit (6a) dazu eingerichtet ist, um das erste Folgefahrzeug (3a) derart zu steuern, dass es dem ersten Leitfahrzeug (2a) folgt, das erste Antriebssystem (5a) derart anzusteuern, dass eine Längsgeschwindigkeit des ersten Folgefahrzeugs (3a) an ein aktuelles Verhalten des vorausfahrenden ersten Leitfahrzeugs (2a) angepasst wird, oder dass das Verhalten des vorausfahrenden ersten Leitfahrzeugs (2a) nachgestellt oder imitiert wird; und/oder
- zweite Steuereinheit (6b) dazu eingerichtet ist, um das zweite Folgefahrzeug (3b) derart zu steuern, dass es dem ersten Folgefahrzeug (3a) folgt, das zweite Antriebssystem (5b) derart anzusteuern, dass eine Längsgeschwindigkeit des zweiten Folgefahrzeugs (3b) an ein aktuelles Verhalten des vorausfahrenden ersten Folgefahrzeug (3a) angepasst wird, oder dass das Verhalten des vorausfahrenden ersten Folgefahrzeugs (3a) nachgestellt oder imitiert wird.

8. Autonom führbarer Fahrzeugzug (1) nach einem der vorhergehenden Ansprüche,
**dadurch gekennzeichnet, dass**
- die erste Kopplungseinheit (4a) ein Umfeldsensorsystem enthält, das dazu eingerichtet ist, wenigstens ein Sensorsignal zu erzeugen, das einen Bereich zwischen dem ersten Leitfahrzeug (2a) und dem ersten Folgefahrzeug (3a) darstellt; und
- die erste Steuereinheit (6a) dazu eingerichtet ist, das erste Antriebssystem (5a) abhängig von dem wenigstens einen Sensorsignal zu steuern.

9. Autonom führbarer Fahrzeugzug (1) nach Anspruch 8,
**dadurch gekennzeichnet, dass**
die erste Steuereinheit (6a) dazu eingerichtet ist, einen Abstand zwischen dem ersten Leitfahrzeug (2a) und dem ersten Folgefahrzeug (3a) zu regeln, sodass der Abstand größer oder gleich einem vorgegebenen Mindestabstand ist.

10. Autonom führbarer Fahrzeugzug (1) nach einem der vorhergehenden Ansprüche,
**dadurch gekennzeichnet, dass**
die erste Kopplungseinheit (4a) ein mechanisches Verbindungselement enthält, das dazu eingerichtet ist, das erste Leitfahrzeug (2a) mit dem ersten Folgefahrzeug (3a) zu verbinden.

11. Autonom führbarer Fahrzeugzug (1) nach Anspruch 10,
**dadurch gekennzeichnet, dass**
- die erste Kopplungseinheit (4a) einen Kraftsensor enthält, der dazu eingerichtet und angeordnet ist, abhängig von einer durch das mechanische Verbindungselement zwischen dem ersten Leitfahrzeug (2a) und dem ersten Folgefahrzeug (3a) übertragenen Kraft ein Kraftsensorsignal zu bestimmen; und
- die erste Steuereinheit (6a) dazu eingerichtet ist, das erste Antriebssystem (5a) abhängig von dem Kraftsensorsignal zu steuern.

12. Autonom führbarer Fahrzeugzug (1) nach einem der vorhergehenden Ansprüche,
**dadurch gekennzeichnet, dass**
das erste Leitfahrzeug (2a) als einachsiges selbstbalancierendes Fahrzeug ausgestaltet ist.

13. Verfahren zum autonomen Führen eines Fahrzeugzugs (1), der ein selbstfahrendes erstes Leitfahrzeug (2a), ein erstes Folgefahrzeug (3a) und ein zweites Folgefahrzeug (3b) enthält, wobei
- das erste Folgefahrzeug (3a) und das erste Leitfahrzeug (2a) aneinander gekoppelt werden;
- das zweite Folgefahrzeug (3b) und das erste Folgefahrzeug (3a) aneinander gekoppelt werden;
- das erste Folgefahrzeug (3a) automatisch so gesteuert wird, dass das erste Folgefahrzeug (3a) dem ersten Leitfahrzeug (2a) folgt, wenn das erste Folgefahrzeug (3a) und das erste Leitfahrzeug (2a) aneinander gekoppelt sind;
- das zweite Folgefahrzeug (3b) automatisch so gesteuert wird, dass das zweite Folgefahrzeug (3b) dem ersten Folgefahrzeug (3a) folgt, wenn das zweite Folgefahrzeug (3b) und das erste Folgefahrzeug (3a) aneinander gekoppelt sind;
- mittels eines Sicherheitssystems (8a) des ersten Leitfahrzeugs (2a) Vorliegen einer Unfallsituation detektiert wird; und
- mittels einer Auslöseeinheit des Sicherheitssystems (8a) ein Aufprallschutzelement (9) des Sicherheitssystems (8a) aktiviert wird, wenn das Vorliegen der Unfallsituation detektiert wurde, wobei das Aufprallschutzelement (9) zumindest zum Teil zwischen dem ersten Leitfahrzeug (2a) und dem ersten Folgefahrzeug (3a) angeordnet wird, wenn das Aufprallschutzelement (9) aktiviert wurde.

14. Verfahren nach Anspruch 13,
**dadurch gekennzeichnet, dass**
das erste Leitfahrzeug (2a) autonom von einer Ausgangsposition zu einer vorgegebenen Zielposition geführt wird.

## Claims

1. Autonomously guided vehicle train (1), wherein
- the vehicle train (1) contains a self-propelled first lead vehicle (2a), a first following vehicle (3a) and a second following vehicle (3b);
- the vehicle train (1) contains a first coupling unit (4a) which is configured to couple the first following vehicle (3a) and the first lead vehicle (2a) to each other;
- the vehicle train (1) contains a second coupling unit (4b) which is configured to couple the second following vehicle (3b) and the first following vehicle (3a) to each other;
- the first following vehicle (3a) contains a first drive system (5a) and a first control unit (6a) which is configured to automatically control the first drive system (5a) such that the first following vehicle (3a) follows the first lead vehicle (2a) when the first following vehicle (3a) and the first lead vehicle (2a) are coupled to each other; and
- the second following vehicle (3b) contains a second drive system (5b) and a second control unit (6b) which is configured to automatically control the second drive system (5b) such that the second following vehicle (3b) follows the first following vehicle (3a) when the second following vehicle (3b) and the first following vehicle (3a) are coupled to each other
- the first lead vehicle (2a) contains a safety system (8a) which is configured to detect the presence of an accident situation;
- the safety system (8a) contains an impact protection element (9) and a trigger unit which is configured to activate the impact protection element (9) when the presence of the accident situation has been detected; and
- the impact protection element (9) is arranged at least in part between the first lead vehicle (2a) and the first following vehicle (3a) when the impact protection element (9) has been activated.

2. Autonomously guided vehicle train (1) according to claim 1,
**characterized in that**
- the vehicle train (1) contains a self-propelled second lead vehicle (2b); and
- the vehicle train (1) contains a third coupling unit (4f) which is configured to couple the second following vehicle (3b) and the second lead vehicle (2b) to each other.

3. Autonomously guided vehicle train (1) according to claim 1,
**characterized in that**
- the vehicle train (1) contains at least one further following vehicle (3c, 3d, 3e);
- the vehicle train (1) contains a further coupling unit (4c) which is configured to couple the at least one further following vehicle (3c, 3d, 3e) and the second following vehicle (3b) to each other.

4. Autonomously guided vehicle train (1) according to claim 3,
**characterized in that**
- the vehicle train (1) contains a self-propelled second lead vehicle (2b); and
- the vehicle train (1) contains a third coupling unit (4f) which is configured to couple a final following vehicle (3e) of the at least one further following vehicle (3c, 3d, 3e) and the second lead vehicle (2b) to each other.

5. Autonomously guided vehicle train (1) according to claim 4,
**characterized in that**
- the first lead vehicle (2a) has a brake actuator and a brake control unit which is configured to actuate the brake actuator, and
- the first lead vehicle (2a) has a communication interface (7a) which is configured to wirelessly transmit an information signal to the second lead vehicle (2b) depending on the actuation of the brake actuator.

6. Autonomously guided vehicle train (1) according to any of the preceding claims,
**characterized in that**
the impact protection element (9) contains an impact pad (9) and the trigger unit is configured to introduce a gas into the impact pad (9) to activate the impact protection element (9).

7. Autonomously guided vehicle train (1) according to any of the preceding claims,
**characterized in that**
- first control unit (6a) is configured to control the first following vehicle (3a) such that it follows the first lead vehicle (2a), to control the first drive system (5a) such that a longitudinal speed of the first following vehicle (3a) is adapted to a current behavior of the first lead vehicle (2a) traveling ahead, or **in that** the behavior of the first lead vehicle (2a) traveling ahead is readjusted or imitated; and/or
- second control unit (6b) is configured to control the second following vehicle (3b) such that it follows the first following vehicle (3a), to control the second drive system (5b) such that a longitudinal speed of the second following vehicle (3b) is adapted to a current behavior of the first following vehicle (3a) traveling ahead, or **in that** the behavior of the first following vehicle (3a) traveling ahead is readjusted or imitated.

8. Autonomously guided vehicle train (1) according to any of the preceding claims,
**characterized in that**
- the first coupling unit (4a) contains an environment sensor system which is configured to generate at least one sensor signal which represents a region between the first lead vehicle (2a) and the first following vehicle (3a); and
- the first control unit (6a) is configured to control the first drive system (5a) depending on the at least one sensor signal.

9. Autonomously guided vehicle train (1) according to claim 8,
**characterized in that**
the first control unit (6a) is configured to control a distance between the first lead vehicle (2a) and the first following vehicle (3a) such that the distance is greater than or equal to a predetermined minimum distance.

10. Autonomously guided vehicle train (1) according to any of the preceding claims,
**characterized in that**
the first coupling unit (4a) contains a mechanical connecting element which is configured to connect the first lead vehicle (2a) to the first following vehicle (3a).

11. Autonomously guided vehicle train (1) according to claim 10,
**characterized in that**
- the first coupling unit (4a) contains a force sensor which is configured and arranged to determine a force sensor signal on the basis of a force transmitted by the mechanical connecting element between the first lead vehicle (2a) and the first following vehicle (3a); and
- the first control unit (6a) is configured to control the first drive system (5a) depending on the force sensor signal.

12. Autonomously guided vehicle train (1) according to any of the preceding claims,
**characterized in that**
the first lead vehicle (2a) is designed as a uniaxial self-balancing vehicle.

13. Method for autonomously guiding a vehicle train (1), which contains a self-propelled first lead vehicle (2a), a first following vehicle (3a) and a second following vehicle (3b), wherein
- the first following vehicle (3a) and the first lead vehicle (2a) are coupled to each other;
- the second following vehicle (3b) and the first following vehicle (3a) are coupled to each other;
- the first following vehicle (3a) is automatically controlled such that the first following vehicle (3a) follows the first lead vehicle (2a) when the first following vehicle (3a) and the first lead vehicle (2a) are coupled to each other;
- the second following vehicle (3b) is automatically controlled such that the second following vehicle (3b) follows the first following vehicle (3a) when the second following vehicle (3b) and the first following vehicle (3a) are coupled to each other;
- the presence of an accident situation is detected by means of a safety system (8a) of the first lead vehicle (2a); and
- an impact protection element (9) of the safety system (8a) is activated by means of a trigger unit of the safety system (8a) if the presence of the accident situation has been detected, wherein the impact protection element (9) is arranged at least in part between the first lead vehicle (2a) and the first following vehicle (3a) when the impact protection element (9) has been activated.

14. Method according to claim 13,
**characterized in that**
the first lead vehicle (2a) is autonomously guided from an initial position to a predetermined target position.

## Revendications

1. Train de véhicules (1) pouvant être guidé de manière autonome, dans lequel
- le train de véhicules (1) comprend un premier véhicule conducteur (2a) automoteur, un premier véhicule suiveur (3a) et un second véhicule suiveur (3b) ;
- le train de véhicules (1) comprend une première unité d'accouplement (4a) qui est conçue pour accoupler le premier véhicule suiveur (3a) et le premier véhicule conducteur (2a) l'un à l'autre ;
- le train de véhicules (1) comprend une deuxième unité d'accouplement (4b) qui est conçue pour accoupler le second véhicule suiveur (3b) et le premier véhicule suiveur (3a) l'un à l'autre ;
- le premier véhicule suiveur (3a) comprend un premier système d'entraînement (5a) et une première unité de commande (6a) qui est configurée pour commander automatiquement le premier système d'entraînement (5a) de sorte que le premier véhicule suiveur (3a) suit le premier véhicule conducteur (2a) lorsque le premier véhicule suiveur (3a) et le premier véhicule conducteur (2a) sont accouplés l'un à l'autre ; et
- le second véhicule suiveur (3b) comprend un second système d'entraînement (5b) et une seconde unité de commande (6b) qui est configurée pour commander automatiquement le second système d'entraînement (5b) de sorte que le second véhicule suiveur (3b) suit le premier véhicule suiveur (3a) lorsque le second véhicule suiveur (3b) et le premier véhicule suiveur (3a) sont accouplés l'un à l'autre
- le premier véhicule conducteur (2a) comprend un système de sécurité (8a) qui est configuré pour détecter la présence d'une situation d'accident ;
- le système de sécurité (8a) comprend un élément de protection contre les chocs (9) ainsi qu'une unité de déclenchement qui est configurée pour activer l'élément de protection contre les chocs (9) lorsque la présence de la situation d'accident a été détectée ; et
- l'élément de protection contre les chocs (9) est disposé au moins en partie entre le premier véhicule conducteur (2a) et le premier véhicule suiveur (3a) lorsque l'élément de protection contre les chocs (9) a été activé.

2. Train de véhicules (1) pouvant être guidé de manière autonome selon la revendication 1,
**caractérisé en ce que**
- le train de véhicules (1) comprend un second véhicule conducteur (2b) automoteur ; et
- le train de véhicules (1) comprend une troisième unité d'accouplement (4f) qui est conçue pour accoupler le second véhicule suiveur (3b) et le second véhicule conducteur (2b) l'un à l'autre.

3. Train de véhicules (1) pouvant être guidé de manière autonome selon la revendication 1,
**caractérisé en ce que**
- le train de véhicules (1) comprend au moins un autre véhicule suiveur (3c, 3d, 3e) ;
- le train de véhicules (1) comprend une autre unité d'accouplement (4c) qui est conçue pour accoupler l'au moins un autre véhicule suiveur (3c, 3d, 3e) et le second véhicule suiveur (3b) l'un à l'autre.

4. Train de véhicules (1) pouvant être guidé de manière autonome selon la revendication 3,
**caractérisé en ce que**
- le train de véhicules (1) comprend un second véhicule conducteur (2b) automoteur ; et
- le train de véhicules (1) comprend une troisième unité d'accouplement (4f) qui est conçue pour accoupler un véhicule suiveur final (3e) de l'au moins un autre véhicule suiveur (3c, 3d, 3e) et le second véhicule conducteur (2b) l'un à l'autre.

5. Train de véhicules (1) pouvant être guidé de manière autonome selon la revendication 4,
**caractérisé en ce que**
- le premier véhicule conducteur (2a) présente un actionneur de frein et une unité de commande de frein qui est configurée pour actionner l'actionneur de frein ; et
- le premier véhicule conducteur (2a) présente une interface de communication (7a) qui est configurée pour transmettre sans fil un signal d'information au second véhicule conducteur (2b) en fonction de l'actionnement de l'actionneur de frein.

6. Train de véhicules (1) pouvant être guidé de manière autonome selon l'une des revendications précédentes,
**caractérisé en ce que**
l'élément de protection contre les chocs (9) comprend un coussin contre les chocs (9) et l'unité de déclenchement est configurée pour introduire un gaz dans le coussin contre les chocs (9) afin d'activer l'élément de protection contre les chocs (9).

7. Train de véhicules (1) pouvant être guidé de manière autonome selon l'une des revendications précédentes,
**caractérisé en ce que**
- première unité de commande (6a) est configurée pour commander le premier véhicule suiveur (3a) de telle sorte qu'il suit le premier véhicule conducteur (2a), pour commander le premier système d'entraînement (5a) de telle sorte qu'une vitesse longitudinale du premier véhicule suiveur (3a) est adaptée à un comportement actuel du premier véhicule conducteur (2a) qui précède, ou que le comportement du premier véhicule conducteur (2a) qui précède est reproduit ou imité ; et/ou
- seconde unité de commande (6b) est configurée pour commander le second véhicule suiveur (3b) de telle sorte qu'il suit le premier véhicule suiveur (3a), pour commander le second système d'entraînement (5b) de telle sorte qu'une vitesse longitudinale du second véhicule suiveur (3b) est adaptée à un comportement actuel du premier véhicule suiveur (3a) qui précède, ou que le comportement du premier véhicule suiveur (3a) qui précède est reproduit ou imité.

8. Train de véhicules (1) pouvant être guidé de manière autonome selon l'une des revendications précédentes,
**caractérisé en ce que**
- la première unité d'accouplement (4a) comprend un système de capteurs d'environnement qui est configuré pour produire au moins un signal de capteur représentant une zone entre le premier véhicule conducteur (2a) et le premier véhicule suiveur (3a) ; et
- la première unité de commande (6a) est configurée pour commander le premier système d'entraînement (5a) en fonction de l'au moins un signal de capteur.

9. Train de véhicules (1) pouvant être guidé de manière autonome selon la revendication 8,
**caractérisé en ce que**
la première unité de commande (6a) est configurée pour régler une distance entre le premier véhicule conducteur (2a) et le premier véhicule suiveur (3a), de sorte que la distance est supérieure ou égale à une distance minimale prédéfinie.

10. Train de véhicules (1) pouvant être guidé de manière autonome selon l'une des revendications précédentes,
**caractérisé en ce que**
la première unité d'accouplement (4a) comprend un élément de liaison mécanique qui est conçu pour relier le premier véhicule conducteur (2a) au premier véhicule suiveur (3a).

11. Train de véhicules (1) pouvant être guidé de manière autonome selon la revendication 10,
**caractérisé en ce que**
- la première unité d'accouplement (4a) comprend un capteur de force qui est configuré et disposé pour déterminer, en fonction d'une force transmise par l'élément de liaison mécanique entre le premier véhicule conducteur (2a) et le premier véhicule suiveur (3a), un signal de capteur de force ; et
- la première unité de commande (6a) est configurée pour commander le premier système d'entraînement (5a) en fonction du signal de capteur de force.

12. Train de véhicules (1) pouvant être guidé de manière autonome selon l'une des revendications précédentes,
**caractérisé en ce que**
le premier véhicule conducteur (2a) est conçu comme un véhicule autoéquilibré à un essieu.

13. Procédé permettant le guidage autonome d'un train de véhicules (1) qui comprend un premier véhicule conducteur (2a) automoteur, un premier véhicule suiveur (3a) et un second véhicule suiveur (3b), dans lequel
- le premier véhicule suiveur (3a) et le premier véhicule conducteur (2a) sont accouplés l'un à l'autre ;
- le second véhicule suiveur (3b) et le premier véhicule suiveur (3a) sont accouplés l'un à l'autre ;
- le premier véhicule suiveur (3a) est commandé automatiquement de sorte que le premier véhicule suiveur (3a) suit le premier véhicule conducteur (2a) lorsque le premier véhicule suiveur (3a) et le premier véhicule conducteur (2a) sont accouplés l'un à l'autre ;
- le second véhicule suiveur (3b) est commandé automatiquement de sorte que le second véhicule suiveur (3b) suit le premier véhicule suiveur (3a) lorsque le second véhicule suiveur (3b) et le premier véhicule suiveur (3a) sont accouplés l'un à l'autre ;
- la présence d'une situation d'accident est détectée au moyen d'un système de sécurité (8a) du premier véhicule conducteur (2a) ; et
- un élément de protection contre les chocs (9) du système de sécurité (8a) est activé au moyen d'une unité de déclenchement du système de sécurité (8a) lorsque la présence de la situation d'accident a été détectée, dans lequel l'élément de protection contre les chocs (9) est disposé au moins en partie entre le premier véhicule conducteur (2a) et le premier véhicule suiveur (3a) lorsque l'élément de protection contre les chocs (9) a été activé.

14. Procédé selon la revendication 13,
**caractérisé en ce que**
le premier véhicule conducteur (2a) est guidé de manière autonome d'une position de départ à une position cible prédéfinie.
